# EUROPÄISCHE PATENTSCHRIFT

(11) **EP 1 272 984 B1**
(45) Veröffentlichungstag und Bekanntmachung des Hinweises auf die Patenterteilung: **15.02.2012**
(21) Anmeldenummer: 00990805.4
(22) Anmeldetag: 20.12.2000
(51) Int. Cl.: G07F 7/10, G06F 7/72

(54) **TRAGBARER DATENTRÄGER MIT SCHUTZ VOR SEITENKANALATTACKEN**
PORTABLE DATA CARRIER WITH PROTECTION AGAINST SIDE CHANNEL ATTACKS
SUPPORT DE DONNEES PORTATIF AVEC PROTECTION CONTRE LES ATTAQUES PAR CANAUX AUXILIAIRES

(30) Priorität: 28.12.1999 DE 19963407
(43) Veröffentlichungstag der Anmeldung: 08.01.2003
(73) Patentinhaber: Giesecke & Devrient GmbH, 81677 München (DE)
(72) Erfinder: DREXLER, Hermann, 81371 München (DE); VATER, Harald, 35398 Giessen (DE)
(86) Internationale Anmeldenummer: PCT/EP2000/013029
(87) Internationale Veröffentlichungsnummer: WO 2001/048706

(56) Entgegenhaltungen:
- EP-A- 0 682 327
- EP-A2- 0 924 895
- EP-A2- 0 924 895
- WO-A1-99/35782
- WO-A1-99/35782
- US-A- 4 759 063
- US-A- 5 991 415
- US-A- 5 991 415
- US-A- 5 991 415
- MESSERGES T S ET AL: "Power analysis attacks of modular exponentiation in smartcards", CRYPTOGRAPHIC HARDWARE AND EMBEDDED SYSTEMS. INTERNATIONALWORKSHOP, XX, XX, 1 August 1999 (1999-08-01), pages 144-157, XP000952221,
- CORON J-S: "RESISTANCE AGAINST DIFFERENTIAL POWER ANALYSIS FOR ELLIPTIC CURVE CRYPTOSYSTEMS", CRYPTOGRAPHIC HARDWARE AND EMBEDDED SYSTEMS. INTERNATIONALWORKSHOP, XX, XX, 1 August 1999 (1999-08-01), pages 292-302, XP000952243,
- HUI L C K ET AL: "Fast square-and-multiply exponentiation for RSA", ELECTRONICS LETTERS, IEE STEVENAGE, GB, vol. 30, no. 17, 18 August 1994 (1994-08-18), pages 1396-1397, XP006000943, ISSN: 0013-5194, DOI: DOI:10.1049/EL:19940949
- KOC C K: "Analysis of sliding window techniques for exponentiation", COMPUTERS AND MATHEMATICS WITH APPLICATIONS, PERGAMON PRESS, OXFORD, GB, vol. 30, no. 10, 1 November 1995 (1995-11-01), pages 17-24, XP009096097, ISSN: 0898-1221, DOI: DOI:10.1016/0898-1221(95)00153-P
- MESSERGES T S ET AL: "Power analysis attacks of modular exponentiation in smartcards", CRYPTOGRAPHIC HARDWARE AND EMBEDDED SYSTEMS. INTERNATIONALWORKSHOP, XX, XX, 1 August 1999 (1999-08-01), pages 144-157, XP000952221,
- CORON J-S: "RESISTANCE AGAINST DIFFERENTIAL POWER ANALYSIS FOR ELLIPTIC CURVE CRYPTOSYSTEMS", CRYPTOGRAPHIC HARDWARE AND EMBEDDED SYSTEMS. INTERNATIONALWORKSHOP, XX, XX, 1 August 1999 (1999-08-01), pages 292-302, XP000952243,
- HUI L C K ET AL: "Fast square-and-multiply exponentiation for RSA", ELECTRONICS LETTERS, IEE STEVENAGE, GB, vol. 30, no. 17, 18 August 1994 (1994-08-18), pages 1396-1397, XP006000943, ISSN: 0013-5194, DOI: DOI:10.1049/EL:19940949

## Beschreibung

Die Erfindung betrifft einen Datenträger, der einen Halbleiterchip aufweist, in dem geheime Daten abgespeichert sind und verarbeitet werden.

Datenträger die einen Chip enthalten, werden in einer Vielzahl von unterschiedlichen Anwendungen eingesetzt, beispielsweise zum Durchführen von Finanztransaktionen, zum Bezahlen von Waren oder Dienstleistungen, oder als Identifikationsmittel zur Steuerung von Zugangs- oder Zutrittskontrollen. Bei allen diesen Anwendungen werden innerhalb des Chips des Datenträgers in der Regel geheime Daten verarbeitet, die vor dem Zugriff durch unberechtigte Dritte geschützt werden müssen. Dieser Schutz wird unter anderem dadurch gewährleistet, daß die inneren Strukturen des Chips sehr kleine Abmessungen aufweisen und daher ein Zugriff auf diese Strukturen mit dem Ziel, Daten, die in diesen Strukturen verarbeitet werden, auszuspähen, sehr schwierig ist. Um einen Zugriff weiter zu erschweren, kann der Chip in eine sehr fest haftende Masse eingebettet werden, bei deren gewaltsamer Entfernung das Halbleiterplättchen zerstört wird oder zumindest die darin gespeicherten geheimen Daten vernichtet werden. Ebenso ist es auch möglich, das Halbleiterplättchen bereits bei dessen Herstellung mit einer Schutzschicht zu versehen, die nicht ohne Zerstörung des Halbleiterplättchens entfernt werden kann.

Mit einer entsprechenden technischen Ausrüstung, die zwar extrem teuer aber dennoch prinzipiell verfügbar ist, könnte es einem Angreifer möglicherweise gelingen, die innere Struktur des Chips freizulegen und zu untersuchen. Das Freilegen könnte beispielsweise durch spezielle Ätzverfahren oder durch einen geeigneten Abschleifprozeß erfolgen. Die so freigelegten Strukturen des Chips, wie beispielsweise Leiterbahnen, könnten mit Mikrosonden kontaktiert oder mit anderen Verfahren untersucht werden, um die Signalverläufe in diesen Strukturen zu ermitteln. Anschließend könnte versucht werden, aus den detektierten Signalen geheime Daten des Datenträgers, wie z.B. geheime Schlüssel zu ermitteln, um diese für Manipulationszwecke einzusetzen. Ebenso könnte versucht werden, über die Mikrosonden die Signalverläufe in den freigelegten Strukturen gezielt zu beeinflussen.

In jüngerer Zeit sind überdies Methoden bekannt geworden, die es erlauben durch die Messung der Stromaufnahme oder des Zeitverhaltens bei der Verschlüsselung auf die geheimen Daten, insbesondere den geheimen Schlüssel zu schließen (Paul C. Kocher, "Timing Attacks on implementation of Diffie-Hellman, RSA, DSS, and other Systems", Springer Verlag 1998; WO 99/35782).

Ein einfacher derartiger Angriff besteht in der "Simple Power Analysis" (SPA). Bei dieser Analysemethode wird beispielsweise eine bekannte Nachricht M einer Verschlüsselung mit einem geheimen Schlüssel d unterzogen, d.h. es wird der verschlüsselte Text Y = M^{d} mod n gebildet. Bei der modularen Exponentiation wird bei einer "1" im Exponenten d eine Quadrier-Operation mit dem Zwischenergebnis und eine Multilizier-Operation mit M durchgeführt, während bei einer "0" in d nur eine Quadrier-Operation mit dem Zwischenergebnis ausgeführt wird. Bei bekanntem M kann durch die Beobachtung des Strom- und/ oder Zeitverhaltens während der Operationen erkannt werden, zu welchen Zeitpunkten die Nachricht M verwendet wird. Da diese immer bei Vorliegen einer "1" in d verwendet wird, kann ohne weiteres auf den Schlüssel geschlossen werden.

Diesem Angriff kann durch Änderungen in der Nachricht M bzw. im Schlüssel d begegnet werden. Aus Paul C. Kocher, "Timing attacks on implementation of Diffie-Hellman, RSA, DSS, and other Systems", Springer Verlag 1998 und der internationalen Patentanmeldung WO 99/35782 sind jedoch Analysemethoden bekannt, bei denen auch bei geänderter, d.h. verschleierter Nachricht oder verschleiertem Schlüssel durch die Aufnahme einer Vielzahl von Meßkurven, in denen das Stromverhalten des integrierten Schaltkreises gemessen wird auf den Schlüssel geschlossen werden kann ("Differential Power Analysis" (DPA) bzw. Higher Order DPA).

Um zu verhindern, daß der Schlüssel einfach erkannt werden kann, indem man bei der Berechnung die Benutzung der zu verschlüsselnden Nachricht erkennt, wurde bereits vorgeschlagen, zur Verschlüsselung der Nachricht einen Faktor r * n hinzuzufügen. Die Umsetzung eines derartigen Algorithmus ist aus Messerges et al, "Power analysis attacks of modular exponentiation in smartcards", Cryptographic hardware and embedded systems, First InternationalWorkshop, CHES'99 Worcester, MA, USA, August 12-13,1999, Seiten 144-157 bekannt. Der Verschlüsselungstext Y = M^{d} mod n wird somit verändert in (M+r*n)^{d} mod n. Damit besteht bei einer Analyse nicht die Möglichkeit, auf die bekannte Nachricht M zurückzugreifen. Aber auch bei dieser Änderung des Nachrichtentextes M kann durch Beobachtung der Stromkurve eine Wiederholung bestimmter Muster erkannt werden. Diese korrelierten Muster enthalten mit hoher Wahrscheinlichkeit (M+r*n), so daß hier wiederum auf die Multiplikation und somit auf eine 1 im geheimen Schlüssel geschlossen werden kann.

Ein weiteres Problem tritt auf, wenn bei der Stromanalyse erkannt werden kann, ob bei einer Multiplikation gleiche (entspricht Quadrier-Operation mit Zwischenergebnis) oder unterschiedliche (entspricht Multiplizier-Operation von Zwischenergebnis mit Nachricht) Faktoren multipliziert werden, da auch damit Multiplikationen mit (M + r*n) identifiziert werden können.

Es ist Aufgabe der Erfindung, geheime Daten, die im Chip eines tragbaren Datenträger vorhanden sind, vor unberechtigtem Zugriff zu schützen, wobei der effiziente Einsatz der Daten nach wie vor gewährleistet sein soll.

Diese Aufgabe wird ausgehend vom Oberbegriff der Ansprüche 1 bzw. 6 durch die kennzeichnenden Merkmale des jeweiligen Anspruchs gelöst.

Die Erfindung geht aus von einem Datenträger mit einem Halbleiterchip der wenigstens einen Speicher aufweist, in dem ein Betriebsprogramm abgelegt ist, das mehrere Befehle beinhaltet, wobei jeder Befehl von außerhalb des Halbleiterchips detektierbare Signale hervorruft.

Gemäß der Erfindung wird der Datenträger so ausgelegt, daß Daten, welche für eine Berechnung mehrmals verwendet werden, mit unterschiedlichen Funktionen verfremdet werden, wobei die zu verfremdenden Daten in der zu verschlüsselnden Nachricht M bestehen, und zur Nachricht M bei jeder Verwendung i (i = 1..k) rᵢ*n hinzuaddiert wird, wobei rᵢ eine Zufallszahl, die für jedes i einen anderen Wert besitzen kann, und n der Modulus ist.

Dabei kann es sich bei den Daten um eine Nachricht handeln, aber auch um Zwischenergebnisse, die bei der Ausführung einer Rechnung entstanden sind oder auch um Daten, die im Datenträger gespeichert sind.

Es kann auch vorgesehen sein, daß die Daten ein Zwischenergebnis sind und eine nachfolgende Quadrier-Operation als Multiplikation ausgeführt wird, wobei das Zwischenergebnis vorher mit unterschiedlichen Funktionen verfremdet wird, oder daß die Daten ein Zwischenergebnis sind und eine nachfolgende Verdoppelung des Zwischenergebnisses als Addition ausgeführt wird, wobei das Zwischenergebnis vorher mit unterschiedlichen Funktionen verfremdet wird. Damit können in vorteilhafter Weise auch Operationen mit dem Zwischenergebnis (Quadrierung, Addition, usw.) sicher gemacht werden.

Es ist insbesondere vorgesehen, die Funktionsverfremdung in einer Verschlüsselung mittels Modulo-Operationen vorzusehen, bei der bei einer "1" im Exponenten d die Nachricht M verwendet wird, und die Nachricht M bei jeder Verwendung mit einer anderen Funktion verändert wird.

Gemäß einer vorteilhaften Ausgestaltung der Erfindung können auch Potenzen der Nachricht M mehrmals auftreten, auf die dann bei jeder Verwendung rᵢ*n addiert wird.

Eine weitere Erhöhung der Sicherheit ergibt sich, wenn der Modulus n mit einem konstanten Faktor k multipliziert wird und erst später eine weitere Modulo-Operation mit dem Modulus n durchgeführt wird, da dann die Zwischenergebnisse ebenfalls verfremdet sind.

Im folgenden wird die Erfindung an Hand eines Ausführungsbeispiels für die modulare Exponentiation beschrieben. Es wird ohne Beschränkung der Allgemeinheit davon ausgegangen, daß die modulare Exponentiation zur Bildung einer verschlüsselten Nachricht Y = M^{d} mod n berechnet wird, indem bei einer "1" in d eine Quadrier-Operation mit dem Zwischenergebnis sowie eine Multiplikation mit der Nachricht M und bei einer "0" eine Quadrier-Operation mit dem Zwischenergebnis durchgeführt wird.

Gemäß der Erfindung wird zur Verschlüsselung zunächst eine Zufallszahl r gewählt und das Produkt r*n gebildet. Anschließend beginnt die Exponentiation mit einer Quadrier-Operation, bei der zum Zwischenergebnis Z das Produkt r*n hinzuaddiert wird, um anstelle von Z*Z mod n den Ausdruck (Z*(Z+r*n) mod k*n) zu berechnen, wobei k eine ganze Zahl ist. Für den Fall, daß der Exponent, d.h. der geheime Schlüssel d, an der Stelle eine "1" enthält wird eine Multiplikationsoperation angeschlossen, für die zunächst zur Nachricht M (rᵢ*n) hinzuaddiert wird, d.h. es wird M + rᵢ*n gebildet und anstelle von Z*M mod n wird (Z*(M + rᵢ*n) mod k*n)) berechnet. Diese Schleife wird so oft durchlaufen, bis alle Stellen des geheimen Schlüssels abgearbeitet sind, wobei bei der jeweils nächsten Multiplikation i um 1 erhöht wird. Nach Beendigung einer Exponentiation wird das Ergebnis noch mod n reduziert.

Durch die Eigenschaft, daß durch die Addition eines ganzzahligen Vielfachen des Modulus zur Nachricht M das Ergebnis nicht verändert wird, kann eine derartige Erweiterung ohne weiteres eingeführt werden und man erhält den Vorteil, daß durch eine Analyse des Stromverhaltens des Chips die Nachricht M nicht mehr feststellbar ist, da aufeinanderfolgende Verarbeitungen der Nachricht nicht mehr korreliert sind und damit kein gleiches, sich wiederholendes Muster erkannt werden kann.

Darüberhinaus ist es bei einer Analyse dann kaum noch möglich eine Multiplizier-Operation von einer Quadrier-Operation zu unterscheiden, da sich sowohl die Zwischenergebnisse Z als auch die verarbeitete Nachricht M + rᵢ*n bei jeder Operation verändern und somit bei einer Multiplizier-Operation wie auch bei einer Quadrier-Operation ein Produkt zwischen dem Zwischenergebnis und einem dazu unkorreliertem Faktor gebildet wird.

Eine weitere Erhöhung der Sicherheit läßt sich noch erreichen, indem sicherheitskritische Rechenoperationen f(z), die eine Korrelation zwischen z und f(z) besitzen, in Rechenoperationen g1(z) und (g2 f(g1(z)) geteilt werden, so daß g1(z) und g2 f(g1(z)) zueinander unkorreliert sind. g1(z) und g2(z) sind dabei geeignete Verfremdungsfunktionen.

## Patentansprüche

1. Datenträger mit einem Halbleiterchip der wenigstens einen Speicher aufweist, in dem ein Betriebsprogramm abgelegt ist, das mehrere Befehle beinhaltet, wobei jeder Befehl von außerhalb des Halbleiterchips detektierbare Signale hervorruft, und der Datenträger ausgelegt ist, um Daten, welche für eine Berechnung in einer Verschlüsselung mit Modulo-Operationen mehrmals verwendet werden, mit unterschiedlichen Funktionen zu verfremden, wobei die zu verfremdenden Daten in der zu verschlüsselnden Nachricht M bestehen, **dadurch gekennzeichnet, dass** zur Nachricht M bei jeder Verwendung i (i = 1..k) rᵢ*n hinzuaddiert wird, wobei rᵢ eine Zufallszahl, die für jedes i einen anderen Wert besitzen kann, und n der Modulus ist.

2. Datenträger nach Anspruch 1, **dadurch gekennzeichnet, daß** die verwendeten Daten ein Zwischenergebnis sind und eine nachfolgende Quadrier-Operation als Multiplikation ausgeführt wird, wobei das Zwischenergebnis vorher mit unterschiedlichen Funktionen verfremdet wird.

3. Datenträger nach Anspruch 1, **dadurch gekennzeichnet, daß** die verwendeten Daten ein Zwischenergebnis sind und eine nachfolgende Verdoppelung des Zwischenergebnisses als Addition ausgeführt wird, wobei das Zwischenergebnis vorher mit unterschiedlichen Funktionen verfremdet wird

4. Datenträger nach Anspruch 1, **dadurch gekennzeichnet, daß** die Berechnung in einer Modulo-Operation besteht, bei der die Potenzen der Nachricht verwendet werden, wobei diese Potenzen der Nachricht bei jeder Verwendung mit einer anderen Funktion verändert werden, indem
zur Nachricht M bei jeder Verwendung i (i = 1..k) rᵢ*n hinzuaddiert wird, wobei rᵢ eine Zufallszahl, die für jedes i einen anderen Wert besitzen kann, und n der Modulus ist.

5. Datenträger nach einem der vorhergehenden Ansprüche, **dadurch gekennzeichnet, daß** der Modulus n mit einem konstanten Faktor k multipliziert wird und eine weitere Modulo-Operation mit dem Modulus n durchgeführt wird.

6. Verfahren zur Sicherung geheimer Daten in Datenträgern mit einem Halbleiterchip der wenigstens einen Speicher aufweist, in dem ein Betriebsprogramm abgelegt ist, das mehrere Befehle beinhaltet, wobei jeder Befehl von außerhalb des Halbleiterchips detektierbare Signale hervorruft, wobei Daten, welche für eine Berechnung in einer Verschlüsselung mit Modulo-Operationen mehrmals verwendet werden mit unterschiedlichen Funktionen verfremdet werden und die zu verfremdenden Daten in der zu verschlüsselnden Nachricht M bestehen **dadurch gekennzeichnet, daß** zur Nachricht M bei jeder Verwendung i (i = 1..k) ein Faktor rᵢ*n hinzuaddiert wird, wobei rᵢ eine Zufallszahl, die für jedes i einen anderen Wert besitzen kann, und n der Modulus ist.

7. Verfahren nach Anspruch 6, **dadurch gekennzeichnet, daß** die verwendeten Daten ein Zwischenergebnis sind und eine nachfolgende Qaudrier-Operation als Multiplikation ausgeführt wird, wobei das Zwischenergebnis vorher mit unterschiedlichen Funktionen verfremdet wird.

8. Verfahren nach Anspruch 6, **dadurch gekennzeichnet, daß** die verwendeten Daten ein Zwischenergebnis sind und eine nachfolgende Verdoppelung des Zwischenergebnisses als Addition ausgeführt wird, wobei das Zwischenergebnis vorher mit unterschiedlichen Funktionen verfremdet wird, indem zur Nachricht M bei jeder Verwendung i (i = 1..k) rᵢ*n hinzuaddiert wird, wobei rᵢ eine Zufallszahl, die für jedes i einen anderen Wert besitzen kann, und n der Modulus ist.

9. Verfahren nach einem der Ansprüche 6 bis 8, **dadurch gekennzeichnet, daß** die Berechnung in einer Modulo-Operation besteht, bei der die Potenzen der Nachricht verwendet werden, wobei diese Potenzen der Nachricht bei jeder Verwendung mit einer anderen Funktion verändert werden.

10. Verfahren nach einem der Ansprüche 6 bis 9, **dadurch gekennzeichnet, daß** der Modulus n mit einem konstanten Faktor k multipliziert wird und eine weitere Modulo-Operation mit dem Modulus n durchgeführt wird.

11. Verfahren nach einem der Ansprüche 6 bis 10, **dadurch gekennzeichnet, daß** sicherheitskritische Rechenoperationen f(z), die eine Korrelation zwischen z und f(z) besitzen in Rechenoperationen g1(z) und (g2 f(g1(z)) aufgeteilt werden, so daß g1(z) und (g2 f(g1(z)) zueinander unkorreliert sind.

## Claims

1. A data carrier having a semiconductor chip which has at least one memory in which there is stored an operating program which contains several commands, whereby each command causes signals that are detectable from outside the semiconductor chip, and the data carrier is designed to distort by different functions data which are used several times for a calculation in an encryption with modulo operations, whereby the data to be distorted consist in the message M to be encrypted, **characterized in that** rᵢ*n is added to the message M upon each use i (i = 1..k), where rᵢ is a random number which can possess a different value for each i, and n is the modulus.

2. The data carrier according to claim 1, **characterized in that** the data used are an intermediate result, and there is performed a subsequent squaring operation as multiplication, whereby the intermediate result is previously distorted by different functions.

3. The data carrier according to claim 1, **characterized in that** the data used are an intermediate result, and there is performed a subsequent doubling of the intermediate result as addition, whereby the intermediate result is previously distorted by different functions.

4. The data carrier according to claim 1, **characterized in that** the calculation consists in a modulo operation wherein the powers of the message M are used, whereby said powers are changed by a different function upon each use by adding rᵢ*n to the message M upon each use i (i = 1..k), where rᵢ is a random number which can possess a different value for each i, and n is the modulus.

5. The data carrier according to any of the above claims, **characterized in that** the modulus n is multiplied by a constant factor k, and a further modulo operation with the modulus n is carried out.

6. A method for protecting secret data in data carriers having a semiconductor chip which has at least one memory in which there is stored an operating program which contains several commands, whereby each command causes signals that are detectable from outside the semiconductor chip, whereby data which are used several times for a calculation in an encryption with modulo operations are distorted by different functions, and the data to be distorted consist in the message M to be encrypted, **characterized in that** a factor rᵢ*n is added to the message M upon each use i (i = 1..k), where rᵢ is a random number which can possess a different value for each i, and n is the modulus.

7. The method according to claim 6, **characterized in that** the data used are an intermediate result, and there is performed a subsequent squaring operation as multiplication, whereby the intermediate result is previously distorted by different functions.

8. The method according to claim 6, **characterized in that** the data used are an intermediate result, and there is performed a subsequent doubling of the intermediate result as addition, whereby the intermediate result is previously distorted by different functions by adding rᵢ*n to the message M upon each use i (i = 1..k), where rᵢ is a random number which can possess a different value for each i, and n is the modulus.

9. The method according to any of claims 6 to 8, **characterized in that** the calculation consists in a modulo operation wherein the powers of the message are used, whereby said powers are changed by a different function upon each use.

10. The method according to any of claims 6 to 9, **characterized in that** the modulus n is multiplied by a constant factor k, and a further modulo operation with the modulus n is carried out.

11. The method according to any of claims 6 to 10, **characterized in that** security-critical arithmetic operations f(z) which possess a correlation between z and f(z) are split into arithmetic operations g1(z) and (g2 f(g1(z)), so that g1(z) and (g2 f(g1(z)) are uncorrelated with one another.

## Revendications

1. Support de données comportant une puce à semi-conducteur dotée d'au moins une mémoire où est stocké un programme d'exploitation comprenant plusieurs instructions, chaque instruction appelant des signaux détectables depuis l'extérieur de la puce à semi-conducteurs, et le support de données étant conçu pour aliéner par différentes fonctions des données utilisées à plusieurs reprises pour un calcul dans un codage par opérations modulo, les données à aliéner équivalant au message M à coder, **caractérisé en ce que** rᵢ.n est ajouté au message M à chaque utilisation i(i = 1..k), rᵢ étant un nombre aléatoire pouvant présenter une valeur différente pour chaque i, et n étant le module.

2. Support de données selon la revendication 1, **caractérisé en ce que** les données utilisées sont un résultat intermédiaire et qu'une élévation au carré consécutive est exécutée en tant que multiplication, le résultat intermédiaire étant préalablement aliéné par différentes fonctions.

3. Support de données selon la revendication 1, **caractérisé en ce que** les données utilisées sont un résultat intermédiaire et qu'un doublement consécutif du résultat intermédiaire est exécuté en tant qu'addition, le résultat intermédiaire étant préalablement aliéné par différentes fonctions.

4. Support de données selon la revendication 1, **caractérisé en ce que** le calcul consiste en une opération modulo utilisant les puissances du message, lesdites puissances du message étant aliénées par une autre fonction à chaque utilisation, en ajoutant rᵢ.n au message M à chaque utilisation i(i = 1..k), rᵢ étant un nombre aléatoire pouvant présenter une valeur différente pour chaque i, et n étant le module.

5. Support de données selon l'une des revendications précédentes, **caractérisé en ce que** le module n est multiplié par un facteur constant k et une autre opération modulo est effectuée avec le module n.

6. Procédé de sécurisation de données secrètes dans des supports de données comportant une puce à semi-conducteur où est stocké un programme d'exploitation comprenant plusieurs instructions, chaque instruction appelant des signaux détectables depuis l'extérieur de la puce à semi-conducteurs, des données utilisées à plusieurs reprises pour un calcul dans un codage par opérations modulo étant aliénées par différentes fonctions, et les données à aliéner équivalant au message M à coder, **caractérisé en ce qu'**un facteur rᵢ.n est ajouté au message M à chaque utilisation i(i = 1..k), rᵢ étant un nombre aléatoire pouvant présenter une valeur différente pour chaque i, et n étant le module.

7. Procédé selon la revendication 6, **caractérisé en ce que** les données utilisées sont un résultat intermédiaire et qu'une élévation au carré consécutive est exécutée en tant que multiplication, le résultat intermédiaire étant préalablement aliéné par différentes fonctions.

8. Procédé selon la revendication 6, **caractérisé en ce que** les données utilisées sont un résultat intermédiaire et qu'un doublement consécutif du résultat intermédiaire est exécuté en tant qu'addition, le résultat intermédiaire étant préalablement aliéné par différentes fonctions, en ajoutant rᵢ.n au message M à chaque utilisation i(i = 1..k), rᵢ étant un nombre aléatoire pouvant présenter une valeur différente pour chaque i, et n étant le module.

9. Procédé selon l'une des revendications 6 à 8, **caractérisé en ce que** le calcul consiste en une opération modulo utilisant les puissances du message, lesdites puissances du message étant aliénées par une autre fonction à chaque utilisation.

10. Procédé selon l'une des revendications 6 à 9, **caractérisé en ce que** le module n est multiplié par un facteur constant k et une autre opération modulo est effectuée avec le module n.

11. Procédé selon l'une des revendications 10 à 18, **caractérisé en ce que** des opérations de calcul f(z) critiques pour la sécurité qui présentent une corrélation entre z et f(z), sont réparties en opérations de calcul g1(z) et (g2 f(g1(z)), de telle manière que g1(z) et (g2f (g1(z)) sont non corrélées entre elles.
